Europäisches Patentamt

European Patent Office

Office européen des brevets

(11) Veröffentlichungsnummer: **0 204 248**
**B1**

# EUROPÄISCHE PATENTSCHRIFT

(45) Veröffentlichungstag der Patentschrift:
02.11.89

(51) Int. Cl.⁴: **H04B 17/02**

(21) Anmeldenummer: 86107168.6

(22) Anmeldetag: 27.05.86

(54) Digitale Übertragungsstrecke mit in Serie geschalteten Telemetriewegen.

(30) Priorität: 31.05.85 DE 3519588

(43) Veröffentlichungstag der Anmeldung:
10.12.86 Patentblatt 86/50

(45) Bekanntmachung des Hinweises auf die Patenterteilung:
02.11.89 Patentblatt 89/44

(84) Benannte Vertragsstaaten:
AT BE CH DE FR GB IT LI NL

(56) Entgegenhaltungen:
DE-A- 3 213 022

TELCOM REPORT, Band 7, Nr. 6,
November-Dezember 1984, Seiten 393-397, Passau, DE;
F. VOLLNHALS: "Di In-Betrieb-Überwachung von
Digitalübertragungssystemen auf Koaxialkabeln"
TELCOM REPORT, Band 7, Nr. 6,
November-Dezember 1984, Seiten 367-371, Passau, DE;
J. DÖMER et al.: "LA 140 KX, ein Übertragungssystem
für 140-Mbit/s- Signale auf Koaxialkabeln"
TELCOM REPORT, Band 7, Nr. 6,
November-Dezember 1984, Seiten 379-384, Passau, DE;
H.G. JUNGMEISTER et al.: "LA 565KX,
ein Übertragungssystem für 565-Mbit/s- Signale auf
Koaxialkabeln"

(73) Patentinhaber: Siemens Aktiengesellschaft,
Wittelsbacherplatz 2, D-8000 München 2(DE)

(72) Erfinder: Dömer, Josef, Dipl.-Ing., Flossgatter 18,
D-8021 Hohenschäftlarn(DE)
Erfinder: Steiner, Erhard, Dr., Flurstrasse 1,
D-8031 Eichenau(DE)
Erfinder: Vollnhals, Friedemann, Dipl.-Ing.,
Mühlpointweg 10, D-8190 Wolfratshausen(DE)

## Beschreibung

Die Erfindung betrifft ein Verfahren entsprechend dem Oberbegriff des Anspruches 1 sowie eine Anordnung zur Durchführung des Verfahrens.

Für die kombinierte Überwachung und Fehlerortung digitaler Übertragungsstrecken wird häufig ein Betriebsüberwachungsverfahren – in service monitoring – verwendet, bei dem in überwachenden Zwischenregeneratoren und Leitungsendgeräten ein Telemetriesignal erzeugt wird. Entsprechend der DE-OS 32 32 681 kann dieses Telemetriesignal im gleichen Signalweg wie das digitale Nutzsignal aber in einem niedrigeren, unbenutzten Frequenzbereich parallel zum digitalen Nutzsignal übertragen werden. Der Weg für das Telemetriesignal wird jeweils in den Zwischenregeneratoren vom Weg für das digitale Nutzsignal getrennt und in den Zwischenregeneratoren enthaltenen Telemetrieeinheiten zugeführt, in denen das übertragene Telemetriesignal regeneriert und verstärkt wird. Die Telemetriesignale bestehen dabei aus einzelnen Telegrammen, wobei von jeder Telemetrieeinheit ein Telegramm gebildet wird, das die Telemetriesignale des betreffenden Zwischenregenerators enthält. Diese Telegramme werden zyklisch ausgesendet, wobei im normalen Betrieb die zyklische Aussendung in einem Leitungsendgerät beginnt und nach dem Empfang dieses Telegramms in der Telemetrieeinheit des nachfolgenden Zwischenregenerators diese ihr eigenes Telegramm anhängt, so daß sich eine Telegrammkette bildet die über den Telemetrieweg zur empfangenden Endstelle übertragen wird. Dort kann anschließend an die Trennung von Telemetriesignal und digitalem Nutzsignal die Auswertung des Telemetriesignals erfolgen. Falls erwünscht kann auch eine Weiterleitung der Telemetriesignale beispielsweise mittels eines Fernwirksystems zu einer auswertenden Endstelle erfolgen. Die Weiterleitung der Telemetriesignale kann auch so erfolgen, daß in der empfangenden Endstelle die Telemetriesignale zusammengefaßt und innerhalb des digitalen Nutzsignals weiter übertragen werden. Eine weitere Möglichkeit zur Übertragung der Telemetriesignale besteht darin, daß diese über einen weiteren Telemetrieweg zu einer auswertenden Stelle übertragen werden, wobei in den Leitungsendgeräten eine feste Verbindung zwischen dem Ende des einen Telemetrieweges und dem Anfang des anderen Telemetrieweges erfolgt. Nachteilig ist dabei, daß bei Ausfall beispielsweise des zweiten Telemetrieweges ohne Eingriff in das Leitungsendgerät keine Telemetrieinformationen über den ersten Telemetrieweg zur Verfügung stehen, so daß der Wunsch nach einer ferngesteuerten Serienschaltung der Telemetriewege besteht (z.B. Telcom Report, Bd. 7, Nr. 6, 1984, Seite 393–397), die bei Bedarf ferngesteuert aufgetrennt werden kann.

Die Aufgabe bei der vorliegenden Erfindung besteht also darin, eine einfache Möglichkeit zur ferngesteuerten Serienschaltung von Telemetriewegen zu finden, die parallel zu den Übertragungswegen für digitale Nutzsignale angeordnet sind.

Erfindungsgemäß wird die Aufgabe dadurch gelöst, daß zur Zusammenschaltung von der ortenden Endstelle in den Informationsblock des von dieser Endstelle abgegebenen Telegramms eine erste charakteristische Impulsfolge eingefügt wird, daß in der fernen Zwischen- oder Endstelle die eingehenden Telegramme auf das Auftreten der ersten charakteristischen Impulsfolge überwacht werden und bei deren Erkennung beim gleichzeitigen Auftreten der Starterkennung im Telegramm der ortenden Endstelle die Serienschaltung vom Ende des einen Telemetrieweges zum Anfang des anderen Telemetrieweges geschaltet wird, sofern die erkennende Zwischen- oder Endstelle nicht gleichzeitig ortende Endstelle ist und daß die Serienschaltung aufgehoben wird, sobald eine zweite, im Telegramm der ortenden Endstelle enthaltene charakteristische Impulsfolge erkannt wird.

Das erfindungsgemäße Verfahren bietet in vorteilhafter Weise die Möglichkeit, Telemetriewege beliebiger Systeme zusammenzuschalten, also beispielsweise zwei sich in der gleichen Übertragungsrichtung erstreckende Telemetriewege zusammenzuschalten, es können auch der Telemetrieweg für die eine Übertragungsrichtung mit dem Telemetrieweg für die Rückrichtung in Serie geschaltet werden. Außerdem ist es möglich, auch Teile von Telemetriewegen zusammen zu schalten.

Besonders vorteilhaft ist es, für den Rückweg den Telemetrieweg eines anderen Systems zu wählen, da dadurch die Ausfallwahrscheinlichkeit verringert werden kann. Die erfindungsgemäße Anordnung bietet den Vorteil des geringen Aufwandes.

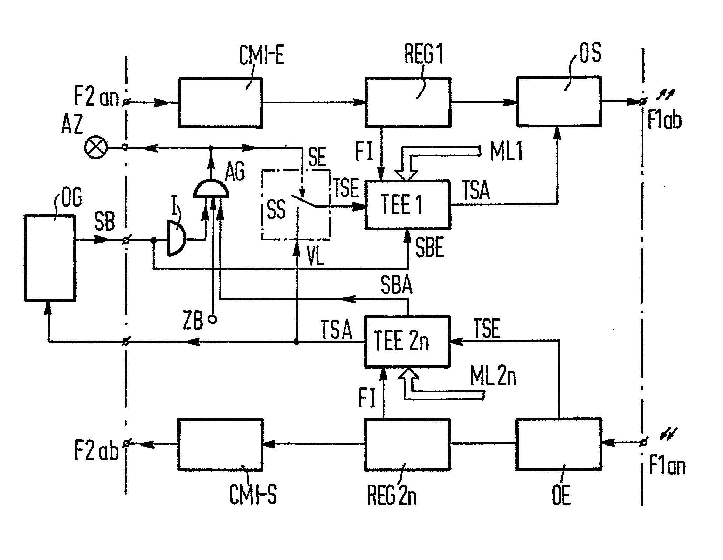

Die Erfindung soll im folgenden anhand der Zeichnung näher erläutert werden.

In der Zeichnung zeigt die Figur das Leitungsendgerät eines optischen Übertragungssystems mit einer Schalteinrichtung für einen Telemetrieweg.

Das in der Figur dargestellte Leitungsendgerät ist Teil eines Übertragungssystems für optische Signale mit einer Bitrate von etwa 140 Mbit/s. Im oberen Teil der Figur ist im Anschluß an eine Empfangs-Schnittstelle F2an ein Leitungsendgerät mit einem Schnittstellenempfänger CMI-E dargestellt. Im Schnittstellenempfänger CMI-E wird das im CMI-Code an der Schnittstelle vorliegende digitale Signal in ein Binärsignal umgeformt und an den im ersten Leitungsendgerät enthaltenen ersten Regenerator REG1 abgegeben, in dem das Binärsignal von Amplituden- und Phasenstörungen befreit wird. Gleichzeitig kann eine erste Überprüfung des Binärsignals auf Coderegelverletzungen erfolgen, entsprechende Fehlerimpulse FI werden an eine erste Telemetrieeinheit TEE1 abgegeben. Das regenerierte Signal gelangt vom ersten Regenerator REG1 zum optischen Sendern OS bei dem es sich um einen an sich bekannten Laserdiodensender handelt, der an der Sende-Schnittstelle F1ab ein optisches Signal an das angeschlossene Lichtwellenleiterkabel abgibt.

In der Gegenrichtung ist ein optischer Empfänger OE vorgesehen, dessen optischer Eingang an das Lichtwellenleiterkabel der Gegenrichtung angeschlossen ist und dessen elektrischer Ausgang mit dem Signaleingang des 2nten Regenerators REG2n angeschlossen ist. Im Regenerator erfolgt die Regenerierung des aus dem optischen Signal gewonnenen elektrischen Signals hinsichtlich Amplitude, Impulsform und Phasenlage der Impulse, außerdem erfolgt eine Überwachung der Signale auf die Einhaltung der Coderegel, bei Nichteinhaltung werden an einem Ausgang Fehlerimpulse FI abgegeben. Ein weiterer Ausgang dieses 2nten Regenerators ist mit dem Eingang eines Schnittstellen-Senders CMI-S verbunden, in dem das optisch übertragene Binärsignal wieder in das an der Schnittstelle vorgeschriebene CMI-codierte Signal umgeformt und der geforderte Schnittstellenpegel erzeugt wird.

Mit dem Schaltbefehlausgang SB des externen angeschlossenen Ortungsgerätes OG ist ein Schaltbefehleingang SBE einer ersten Telemetrieeinheit TEE1 sowie über einen Inverter I der eine Eingang eines UND-Gatters AG verbunden, das einen zweiten Eingang für an einen Zusatzbefehlsgeber ZB enthält.

Dadurch ist es möglich, eine weitere Bedingung für die Serienschaltung der Telemetriewege zu verknüpfen, zur Erzeugung einer Serienschaltung liegt an diesem zweiten Eingang der logische 1-Pegel. Der Ausgang des UND-Gatters AG ist mit einer externen Anzeige AZ sowie mit dem Steuereingang SE eines Serienschalters SS verbunden, der Ausgang dieses Serienschalters ist mit dem Telemetriesignaleingang TSE der ersten Telemetrieeinheit TEE1 verbunden. Die Telemetrieeinheit verfügt über einen ersten Eingang, der an einen Ausgang für Fehlerimpulse FI des ersten Regenerators REG1 angeschlossen ist, sowie über weitere Eingänge zum Anschluß der ersten Meldeleitungen ML1. Über diese Meldeleitungen gelangen die Meldungen über die Betriebszustände in der betreffenden Stelle an die Telemetrieeinheit, in der die Meldungen zu einem Telegramm zusammengefaßt werden. Der Telemetriesignalausgang TSA der ersten Telemetrieeinheit TEE1 ist mit einem Signaleingang des optischen Senders OS verbunden, in dem die Telemetriesignale zusammen mit dem digitalen Nutzsignal kombiniert und als Lichtsignal ausgestrahlt werden.

In der Gegenrichtung ist mit einem Telemetriesignalausgang des optischen Empfängers OE ein Telemetriesignaleingang TSE der 2n-ten Telemetrieeinheit TEE2n verbunden, an weitere Eingänge dieser Telemetrieeinheit sind die 2n-ten Meldeleitungen ML2n sowie der Ausgang für Fehlerimpulse FI des 2nten Regenerators REG2n angeschlossen. Ein Schaltbefehlausgang SBA der 2n-ten Telemetrieeinheit ist mit einem dritten Eingang des UND-Gatters AG verbunden, der Telemetriesignalausgang TSA der 2n-ten Telemetrieeinheit ist über eine Verbindungsleitung VL mit dem Signaleingang des Serienschalters SS sowie mit einem Signaleingang des Ortungsgerätes OE zur Auswertung der Telemetriesignale verbunden. In Zwischenstellen oder Endstellen in denen kein Ortungsgerät vorgesehen ist, wird anstelle des Anschlusses für den Schaltbefehl SB des Ortungsgerätes der logische Nullpegel angelegt und damit der Schaltbefehleingang SBE der zugeordneten Telemetrieeinheit inaktiviert, gleichzeitig aber vom Inverter I der logische Einspegel an das UND-Gatter AG abgegeben, um in diesen Stellen eine Serienschaltung zu ermöglichen.

Grundsätzlich kann sowohl in beiden Endstellen als auch in beliebigen Zwischenstellen eine Serienschaltung der Telemetriewege erfolgen, in den Zwischenstellen sind dabei anstelle des CMI-Empfängers und des CMI-Senders jeweils ein optischer Empfänger und ein optischer Sender vorgesehen, es entfällt dort auch das Ortungsgerät.

Für die weiteren Betrachtungen sei angenommen, daß beim Ausführungsbeispiel in jedem der nachgeschalteten Zwischenregeneratoren eine Telemetrieeinheit enthalten ist, so daß an den im fernen Leitungsendgerät angeordneten Endregenerator, der gleichzeitig n-ter Regenerator ist, eine n-te Telemetrieeinheit TEEn angeschlossen ist. In der fernen Endstelle beginnt die Gegenrichtung der optischen Übertragungsstrecke mit dem Regenerator n+1, diese Gegenrichtung endet im dargestellten Leitungsendgerät 2n-ten Zwischenregenerator mit der Telemetrieeinheit TEE2n.

Die Telemetriesignalübertragung für die optische Übertragungsstrecke beginnt mit der Erzeugung des ersten Telegramms im dargestellten Leitungsendgerät in der ersten Telemetrieeinheit TEE1. Von dieser Telemetrieeinheit wird aus den Fehlerimpulsen FI und den von den Meldeleitungen ML1 übermittelten Informationen ein erstes Telegramm gebildet, das über den Telemetriesignalausgang TSA der ersten Telemetrieeinheit an den optischen Sender OS abgegeben und von diesem zusammen mit den digitalen Nutzsignalen in ein Lichtsignal umgeformt und an die Lichtwellenleiterstrecke abgegeben wird.

In der Gegenrichtung wird vom optischem Empfänger OE das empfangene optische Signal in ein elektrisches Signal umgeformt und in das digitale Nutzsignal und das Telemetriesignal aufgespalten. Das Telemetriesignal besteht nun aus 2n-1 Telegrammen, die über den Telemetriesignaleingang TSE der 2n-ten Telemetrieeinheit TEE2n zugeführt werden und von dieser wiederum verstärkten regeneriert werden. Außerdem wird das 2n-te Telegramm an die empfangenen Telemetriesignale angehängt, in dem die Informationen der Meldeleitungen ML2n und der Fehlerimpulse FI vom Regenerator REG2n enthalten sind. Die nunmehr kompletten Telemetriesignale werden über den Telemetriesignalausgang TSA der 2n-ten Telemetrieeinheit an ein außerhalb des Leitungsendgerätes angeordnetes Ortungsgerät OG abgegeben und dort ausgewertet.

Zur Serienschaltung der Telemetriewege in der fernen Endstelle wird  vom Ortungsgerät OG ein Schaltbefehl SB abgegeben, der im vorliegenden Fall einen Impuls mit dem logischen 1-Pegel entspricht und an den Schaltbefehleingang SBE der ersten Telemetrieeinheit TEE1 abgegeben wird. Von dieser wird daraufhin das abgegebene Telegramm verändert. Die Telegramme bestehen im vorliegenden Falle aus zwei aufeinanderfolgenden Kopfzeichen, an die sich ein Informationsblock und ein Endezeichen anschließen. Der Informationsblock besteht aus vier Worten mit je vier Bit, wobei das zweite Vierbitwort die Inversion des ersten und das vierte Vierbitwort die Inversion des dritten Vierbitwortes darstellt. Da im normalen Betrieb die erste Telemetrieeinheit TEE1 mit der Telegrammaussendung beginnt, ist im dritten und damit auch im vierten Vierbitwort die Information enthalten, daß diese Telemetrieeinheit die Telegrammaussendung startet, es wird also die sogenannte "Starterkennung" übertragen. Zur Übertragung des Schaltbefehls zur fernen Endstelle wird nun als erstes Vierbitwort die Folge 1011 und entsprechend als zweites Vierbitwort die Folge 0100 übertragen.

Der Schaltbefehl SB gelangt vom Ausgang des Ortungsgerätes OG auch zum Inverter I und erscheint als Nullpegel am einen Eingang des UND-Gatters AG, so daß dessen Ausgang gesperrt bleibt. Im Ausführungsbeispiel ist das zweite Leitungsendgerät am Ende der Übertragungsstrecke identisch aufgebaut, so daß die Serienschaltung des Telemetrieweges der Hinrichtung und des Telemetrieweges der Rückrichtung auch am dargestellten Leitungsendgerät erläutert werden kann. Ist ein Schaltbefehl zur Serienschaltung von einem Ortungsgerät über das Leitungsendgerät in das erste Telegramm der Telemetriesignale eingeblendet worden, dann wird bei Empfang dieser Telemetriesignale in der 2n-ten Telemetrieeinheit TEE dieser Schaltbefehl als logischer 1-Pegel vom Schaltbefehlausgang SBA der 2nten Telemetrieeinheit TEE2n an den zweiten Eingang des UND-Gatters AG abgegeben. Da in diesem Falle vom Ortungsgerät OG kein Schaltbefehl SB an den Inverter abgegeben wird, steht am Invertereingang der logische Nullpegel und damit am Inverterausgang und am ersten Eingang des UND-Gatters der logische 1-Pegel, so daß das UND-Gatter AG ein Signal entsprechend dem logischen 1-Pegel an die Anzeigeeinrichtung AZ und an den Steuereingang SE des Serienschalters SS abgibt. Dadurch wird der Serienschalter geschlossen und eine Verbindung vom Telemetriesignalausgang TSA der 2n-ten Telemetrieeinheit TEE2n über die Verbindungsleitung VL zum Telemetriesignaleingang TSE der ersten Telemetrieeinheit TEE1 geschaltet. Dadurch würden die in der 2n-ten Telemetrieeinheit TEE ankommenden Telemetriesignale zur Gegenrichtung weitergeleitet und zusammen mit dem Telegramm der ersten Telemetrieeinheit an den optischen Sender OS abgegeben. Entsprechend wird, falls das dargestellte Leitungsendgerät mit dem angeschlossenen Ortungsgerät einen Schaltbefehl abgibt, eine Verbindung von der nten Telemetrieeinheit TEEn im fernen Leitungsendgerät zur (n+1)-ten Telemetrieeinheit TEEn+1 geschaltet.

Zum Aufheben der Serienschaltung wird von dem Ortungsgerät das die Serienschaltung ausgelöst hat, ein Schaltbefehl SB ausgesendet. Dieser Schaltbefehl veranlaßt die angeschlossene Telemetrieeinheit dazu, in dem Informationsblock des Telegramms anstelle der charakteristischen Impulsfolge 1011 die charakteristische Impulsfolge 1110 im ersten Vierbitwort und die entsprechende invertierte Folge im zweiten Vierbitwort einzusetzen. Beim Erkennen dieser charakteristischen Impulsfolge in der Telemetrieeinheit, die den Schaltbefehl zur Serienschaltung erzeugt hatte, wird der logische Pegel am Ausgang dieser Telemetrieeinheit von logisch "1" auf logisch "0" geändert, so daß das angeschlossene UND-Gatter AG nunmehr sperrt und am Steuereingang SE des Serienschalters SS kein wirksames Potential mehr anliegt. Damit wird der Serienschalter SS geöffnet, so daß die nachgeschaltete Telemetrieeinheit keine Telemetriesignale über diesen Schalter mehr erhält.

Anstelle des in der Figur dargestellten Leitungsendgerätes mit Serienschalter kann in der ortenden Endstelle, in der eine Serienschaltung nicht beabsichtigt ist, auch ein vereinfachtes Leitungsendgerät eingesetzt werden. Bei diesem entfällt der Inverter I, das UND-Gatter AG, die Anzeige AZ und der Serienschalter SS. Damit kann zwar vom Ortungsgerät OG ein Schaltbefehl SB zum Schaltbefehleingang SBE der ersten Telemetrieeinheit TEE1 gelangen, die Aussendung von Telegrammen von dieser Telemetrieeinheit endet aber nach dem ersten Telegramm, es können also keine Telegramme der Gegenrichtung angefügt werden. Es handelt sich also um ein übliches Leitungsendgerät nach dem Stande der Technik, das nicht erweitert werden muß, aber auch nicht den Vorteil bietet, wahlweise am einen oder am anderen Ende einer Übertragungsstrecke die gesamten Telemetriesignale zur Auswertung zur Verfügung zu haben.

**Patentansprüche**

1. Verfahren zur Serienschaltung der Telemetriewege beider Übertragungsrichtungen in einer fernen Zwischen- oder Endstelle einer digitalen Übertragungsstrecke, in der digitale Nutzsignale und die telemetrischen Signale über parallele Wege übertragen werden, wobei die telemetrischen Signale aus einzelnen Telegrammen bestehen, die von einer Endstelle und daran anschließend von den überwachenden Zwischenregeneratoren sowie vom Regenerator der anderen Endstelle gebildet werden und wobei die Telegramme jeweils wenigstens ein Kopfzeichen, einen Informationsblock und ein Endezeichen enthalten und im Informationsblock als Starterkennung ein Hinweis auf diejenige Stelle eingefügt ist, die mit der zyklischen Aussendung der Telegramme beginnt, **dadurch gekennzeichnet**, daß zur Zusammenschaltung von der ortenden Endstelle in den Informationsblock des von dieser Endstelle abgegebenen Telegramms eine erste charakteristische Impulsfolge eingefügt wird, daß in der fernen Zwischen- oder Endstelle die eingehenden Telegramme auf das Auftreten der ersten charakteristischen Impulsfolge überwacht werden und bei deren Erkennung beim gleichzeitigen Auftreten der Starterkennung im Telegramm der ortenden Endstelle die Serienschaltung vom Ende des einen Telemetrieweges zum Anfang des anderen Telemetrieweges geschaltet wird, sofern die erkennende Zwischen- oder Endstelle nicht gleichzeitig ortende Endstelle ist und daß die Serienschaltung aufgehoben wird, sobald eine zweite, im Telegramm der ortenden Endstelle enthaltene charakteristische Impulsfolge erkannt wird.

2. Verfahren nach Anspruch 1, **dadurch gekennzeichnet**, daß die Serienschaltung der Telemetriewege in derjenigen Stelle erfolgt, in der bei Vorliegen eines Zusatzbefehls (ZB) die charakteristische Impulsfolge empfangen wird.

3. Verfahren nach Anspruch 1 oder 2, **dadurch gekennzeichnet**, daß die Telemetriewege von zwei unterschiedlichen digitalen Übertragungstrecken in Serie geschaltet werden.

4. Verfahren nach Anspruch 4, **dadurch gekennzeichnet**, daß der Telemetrieweg für die eine Übertragungsrichtung der einen Übertragungsstrecke und der Telemetrieweg für die Gegenrichtung in Serie geschaltet werden.

5. Verfahren nach einem der Ansprüche 1 bis 4, **dadurch gekennzeichnet**, daß die Serienschaltung auch dann aufgehoben wird, wenn in der fernen Zwischen- oder Endstelle nicht mehr die Starterkennung der überwachenden Endstelle empfangen wird.

6. Verfahren nach Ansprüchen 1 oder 2, **dadurch gekennzeichnet**, daß eine der charakteristischen Impulsfolgen gleichzeitig mit der Starterkennung im Informationsblock enthalten ist.

7. Anordnung zur Durchführung der Verfahren nach einem der Ansprüche 1 bis 6, **dadurch gekennzeichnet**, daß ein Leitungsendgerät und ein mit Anschlüssen dieses Leitungsendgerätes verbundenes Ortungsgerät (OG) vorgesehen sind und daß das Leitungsendgerüt einen mit der digitalen Schnittstelle (F2an) verbundenen Schnittstellenempfänger (CMI-E) enthält, dessen Ausgang mit einem Eingang eines ersten Regenerators (REG1) verbunden ist, daß der Ausgang des Regenerators mit dem Eingang eines optischen Senders (OS) und dessen Ausgang mit einem Lichtwellenleiterkabel verbunden sind, daß in der Gegenrichtung ein optischer Empfänger (OE) vorgesehen ist, dessen Eingang mit einem Anschluß eines Lichtwellenleiterkabels verbunden ist und dessen Ausgang mit dem Signaleingang des 2n-ten Regenerators (REG2n) verbunden ist, daß der Ausgang des 2n-ten Regenerators mit dem Eingang eines CMI-Senders (CMI-S) zur Erzeugung des Schnittstellencodes verbunden ist, dessen Signale an eine Schnittstelle (F2ab) abgegeben werden, daß mit dem Schaltbefehlausgang (SB) des Ortungsgerätes (OG) ein Schaltbefehleingang (SBE) einer ersten Telemetrieeinheit (TEE1) sowie über einen Inverter (I) der eine Eingang eines UND-Gatters (AG) verbunden sind, daß ein weiterer Eingang dieses UND-Gatters mit einem Anschluß für einen Zusatzbefehlsgeber (ZB) verbunden ist, daß der Ausgang des UND-Gatters (AG) mit einer externen Anzeige (AZ) sowie mit dem Steuereingang (SE) eines Serienschalters (SS) verbunden ist, daß der Ausgang des Serienschalters mit dem Telemetriesignaleingang (TSE) der ersten Telemetrieeinheit (TEE1) verbunden ist, daß die Eingänge dieser Telemetrieeinheit jeweils getrennt mit einem Ausgang für Fehlerimpulse (FI) des ersten Regenerators (REG1) sowie mit ersten Meldeleitungen (ML1) verbunden sind und daß der Telemetriesignalausgang (TSA) der ersten Telemetrieeinheit (TEE1) mit einem Signaleingang des optischen Senders (OS) verbunden ist, daß mit einem Telemetriesignalausgang des optischen Empfängers (OE) ein Telemetriesignaleingang (TSE) der 2n-ten Telemetrieeinheit (TEE2n) verbunden ist, daß weitere Eingänge dieser Telemetrieeinheit mit 2n-ten Meldeleitungen (ML2n) sowie mit einem Ausgang für Fehlerimpulse (FI) des 2n-ten Regenerators (REG2n) verbunden sind, daß ein Schaltbefehlausgang (SBA) der 2n-ten Telemetrieeinheit mit dem dritten Eingang des UND-Gatters (AG) verbunden ist und daß der Telemetriesignalausgang (TSA) der 2n-ten Telemetrieeinheit über eine Verbindungsleitung (VL) mit dem Signaleingang des Serienschalters (SS) sowie mit einem Signaleingang des Ortungsgerätes (OG) verbunden ist.

**Revendications**

1. Procédé pour monter en série les canaux de télémétrie des deux sens de transmission dans un poste intermédiaire ou d'extrémité distant d'une voie de transmission numérique dans laquelle sont transmis des signaux numériques utiles et les signaux de télémétrie par des voies parallèles, du type dans lequel les signaux télémétriques sont constitués par des télégrammes individuels qui sont formés par un poste d'extrémité et, ensuite, par les régénérateurs intermédiaires à contrôler ainsi que par le régénérateur de l'autre poste d'extrémité, alors que chacun des télégrammes comporte au moins un caractère d'en-tête, un bloc d'informations et un caractère final, et que dans le bloc d'informations est inséré, en tant que caractérisation du lancement, une indication concernant l'emplacement avec lequel commence l'émission cyclique des télégrammes, caractérisé par le fait que pour réaliser l'interconnexion, un premier train d'impulsions caractéristique est inséré, par le poste d'extrémité à localiser, dans le bloc d'informations du télégramme émis par ce poste terminal, que dans le poste intermédiaire ou d'extrémité à distance sont contrôlés les télégrammes reçus du point de vue de l'apparition des premiers trains d'impulsions caractéristiques et que lors de l'identification de ceux-ci, et à l'apparition simultanée de la reconnaissance du lancement dans le télégramme du poste terminal de localisation, on réalise le montage série de la fin du premier canal de télémétrie avec le début de l'autre canal de télémétrie, dans la mesure où le poste intermédiaire ou d'extrémité procédant à cette reconnaissance n'est pas en même temps le poste d'extrémité procédant à la localisation, et que le montage en série est supprimé dès que l'on reconnaît un train d'impulsions caractéristique contenu dans le télégramme du poste d'extrémité de localisation.

2. Procédé selon la revendication 1, caractérisé par le fait que le montage en série des voies de télémétrie a lieu à l'emplacement auquel est reçu le train d'impulsions caractéristique, lors de la présence d'une instruction supplémentaire (ZB).

3. Procédé selon la revendication 1 ou 2, caractérisé par le fait que les canaux de télémétrie de deux voies numériques de transmission différente, sont montés en série.

4. Procédé selon la revendication 3, caractérisé par le fait que le canal de télémétrie pour un premier sens de la transmission de la première voie de transmission et le canal de télémétrie pour le sens opposé sont montés en série.

5. Procédé selon l'une des revendications 1 à 4, caractérisé par le fait que le montage en série est supprimé également lorsque l'on ne reçoit pas, dans le poste intermédiaire ou d'extrémité distant, le signe de reconnaissance du lancement du poste terminal de contrôle.

6. Procédé selon les revendications 1 ou 2, caractérisé par le fait que l'un des trains d'impulsions caractéristiques est contenu, avec en même temps la reconnaissance du lancement, dans le bloc d'informations.

7. Dispositif pour la mise en œuvre du procédé selon l'une des revendications 1 à 6, caractérisé par le fait qu'il est prévu un poste d'extrémités de ligne et un poste de localisation qui est relié aux bornes de liaison de cet appareil d'extrémité de ligne, et que l'appareil d'extrémité de ligne comporte un récepteur d'interface (CMI-E) qui est relié à l'interface numérique (F2an), et dont la sortie est reliée à une entrée d'un premier régénérateur (REG1), que la sortie du régénérateur est relié à l'entrée d'un émetteur optique (OS) et la sortie de celui-ci est reliée à un câble à guide d'ondes de lumière, qu'il est prévu, dans le sens opposé, un récepteur optique (OE) dont l'entrée est reliée à une borne de liaison d'un câble à guide d'ondes de lumière et la sortie de celui-ci est relié à l'entrée des signaux du 2nième régénérateur (REG2n), que la sortie du 2nième régénérateur est reliée à l'entrée d'un émetteur CMI (CMI-S) servant à produire le code d'interface, dont les signaux sont fournis à un interface (F2ab), qu'à la sortie des instructions de commutation (SB) de l'appareil de localisation (OG) sont reliées une entrée d'instructions de commutation (SBE) d'une première unité de télémétrie (TEE1) ainsi que, par l'intermédiaire d'un inverseur (I), une entrée d'une porte ET (AG), qu'une seconde entrée de cette porte ET est reliée avec une borne pour un générateur d'instructions supplémentaire (ZB), que la sortie de la porte ET (AG) est reliée avec un dispositif d'affichage extérieur (AZ) ainsi qu'avec l'entrée de commande (SE) d'un commutateur série (SS), que la sortie de l'interrupteur série est reliée avec l'entrée des signaux de télémétrie (TSE) de la première unité de télémétrie (TEE1), que les entrées de cette unité sont respectivement et séparément reliées avec une sortie pour les impulsions de défaut (FI) du premier régénérateur (REG1) ainsi qu'avec des premiers conducteurs de signalisation (ML1), et que la sortie des signaux de télémétrie (TSA) de la première unité de télémétrie (TEE1) est reliée avec une entrée de signaux de l'émetteur optique (OS), qu'à une première sortie des signaux de télémétrie du récepteur optique (OE) est reliée une entrée des signaux de télémétrie (TSE) de la 2nième unité de télémétrie (TEE2n), que des entrées supplémentaires de cette unité de télémétrie sont reliées avec les 2nième conducteurs de signalisation (ML2n) ainsi qu'avec une sortie pour des impulsions de défaut (FI) du 2nième régénérateur (REG2n), qu'une sortie d'instructions de commutation (SBA) de la 2nième unité de télémétrie est reliée à la troisième entrée de la porte ET (AG) et que la sortie des signaux de télémétrie (TSA) de la 2nième unité de télémétrie est reliée par l'intermédiaire d'un conducteur de liaison (VL), avec l'entrée des signaux de l'interrupteur série (SS) ainsi qu'avec une entrée des signaux de l'appareil de localisation (OG).

## Claims

1. Method for a series-connecting telemetry channels in both directions of transmission in a remote intermediate or terminal station of a digital transmission link, in which useful digital signals and the telemetry signals are transmitted via parallel channels, the telemetry signals consisting of individual messages which are formed by a terminal station and subsequently to that by the monitoring regenerative repeaters and by the regenerator of the other terminal station and the messages in each case containing at least one head signal, an information block and an end signal and a pointer to the position which begins with the cyclic transmission of the messages being inserted as start marker in the information block, characterized in that for the connecting-together, a first characteristic pulse sequence is inserted by the fault-locating terminal station into the information block of the message delivered by this terminal station, that the incoming messages are monitored for the occurrence of the first characteristic pulse sequence in the remote intermediate or terminal station and, when this is detected with the simultaneous occurrence of the start marker in the message of the fault-locating terminal station, the series-connection is switched from the end of one telemetry channel to the beginning of the other telemetry channel if the detecting intermediate or terminal station is not at the same time the fault-locating terminal station, and that the series-connecting is cancelled as soon as a second characteristic pulse sequence contained in the message of the fault-locating terminal station is detected.

2. Method according to claim 1, characterized in that the telemetry channels are series-connected in the station in which the characteristic pulse sequence is received when an additional instruction (ZB) is present.

3. Method according to claim 1 or 2, characterized in that the telemetry channels of two different digital transmission links are connected in series.

4. Method according to claim 3, characterized in that the telemetry channel for one transmission direction of one transmission link and the telemetry channel for the opposite direction are connected in series.

5. Method according to one of claims 1 to 4, characterized in that the series-connection is cancelled even if the start marker of the monitoring terminal station is no longer received in the remote intermediate or terminal station.

6. Method according to claims 1 or 2, characterized in that one of the characteristic pulse sequences is contained simultaneously with the start marker in the information block.

7. Arrangement for carrying out the method according to one of claims 1 to 6, characterized in that a line terminal device and a fault-locating device (OG) connected to the connections of this line terminal device are provided and that the line terminal device contains an interface receiver (CMI-E) which is connected to the digital interface (F2an), the output of which interface receiver is connected to an input of a first regenerator (REG1), that the output of the regenerator is connected to the input of an optical transmitter (OS) and the output of the latter is connected to an optical waveguide cable, that an optical receiver (OE), the input of which is connected to a connection of an optical waveguide cable and the output of which is connected to the signal input of the 2nth regenerator (REG2n), is provided in the opposite direction, that the output of the 2nth regenerator is connected to the input of a CMI transmitter (CMI-S) for generating the interface code, the signals of which are delivered to an interface (F2ab), that the switching command output (SB) of the fault-locating device (OG) is connected to a switching command input (SBE) of a first telemetry unit (TEE1) and via an inverter (I) to one input of an AND gate (AG), that a further input of this AND gate is connected to a connection for an additional command transmitter (ZB), that the output of the AND gate (AG) is connected to an external display (AZ) and to the control input (SE) of a series switch (SS), that the output of the series switch is connected to the telemetry signal input (TSE) of the first telemetry unit (TEE1), that the inputs of this telemetry unit are in each case separately connected to an output for error pulses (FI) of the first regenerator (REG1) and to first signalling lines (ML1), and that the telemetry signal output (TSA) of the first telemetry unit (TEE1) is connected to a signal input of the optical transmitter (OS), that a telemetry signal output of the optical receiver (OE) is connected to a telemetry signal input (TSE) of the 2nth telemetry unit (TEE2n), that further inputs of this telemetry unit are connected to 2nth signalling lines (ML2n) and to an output for error pulses (FI) of the 2nth regenerator (REG2n), that a switching command output (SBA) of the 2nth telemetry unit is connected to the third input of the AND gate (AG), and that the telemetry signal output (TSA) of the 2nth telemetry unit is connected via a connecting line (VL) to the signal input of the series switch (SS) and to a signal input of the fault-locating device (OG).